# EUROPÄISCHE PATENTSCHRIFT

(11) **EP 2 096 210 B1**
(45) Veröffentlichungstag und Bekanntmachung des Hinweises auf die Patenterteilung: **18.04.2012**
(21) Anmeldenummer: 09002804.4
(22) Anmeldetag: 27.02.2009
(51) Int. Cl.: D21J 3/04

(54) **Vorrichtung und Verfahren zur Herstellung zumindest eines mehrere Hohlräume aufweisenden bahnförmigen Pressmaterials, insbesondere eines Kartonagenmaterials**
Device and method for creating at least one sheet-like press material containing several hollow spaces, in particular a carton material
Dispositif et procédé de fabrication d'au moins un matériau compressé en forme de bande comprenant plusieurs espaces creux, notamment un matériau de cartonnage

(30) Priorität: 28.02.2008 DE 102008011584
(43) Veröffentlichungstag der Anmeldung: 02.09.2009
(73) Patentinhaber: Seidler, Waldemar, 92724 Trabitz/Weiden (DE)
(72) Erfinder: Seidler, Waldemar, 92724 Trabitz/Weiden (DE)
(74) Vertreter: Graf Glück Habersack Kritzenberger

(56) Entgegenhaltungen:
- WO-A-2007/119897
- AU-B2- 430 621
- DE-A1- 2 423 140
- DE-A1- 2 613 909
- DE-A1-102006 021 275
- DE-C1- 4 324 272

## Beschreibung

Die Erfindung betrifft eine Vorrichtung und ein Verfahren zur Herstellung zumindest eines mehrere Hohlräume aufweisenden bahnförmigen Pressmaterials, insbesondere eines Kartonagenmaterials gemäß dem Oberbegriff der Patentansprüche 1 und 16.

Aus dem Stand der Technik sind diverse Anlagen zur Herstellung von mehrere Hohlräume aufweisenden Kartonagenmaterial bzw. mehrlagigen Kartonagen wie beispielsweise Wellpappen bekannt, bei denen mehrere endlose Materialbahnen mit Hilfe von so genannten Splice-Einrichtungen miteinander verbunden werden, wobei unter "Splicen" das Verbinden der endlichen Materialbahnen zu einer endlosen Materialbahn verstanden wird. Zur Erzeugung von Wellpappe wird beispielsweise eine erste und zweite geradlinige endlose Materialbahn abgerollt und anschließend übereinander gelegt, wobei zwischen den beiden geradlinigen Materialbahnen eine geriffelte Materialbahn eingefügt wird und mit der oberen und unteren geradlinigen Materialbahn zur Erzeugung der Wellpappe verklebt wird.

Ferner ist aus der DE 44 02 318 A1 ein Verfahren zur Herstellung von Hülsen aus Papierstoffen bekannt, bei dem mittels eines direkten Pressverfahrens nach einer üblichen Stoffaufbereitung in einer Siebpartie diskontinuierlich eine dicke Hülsenform aus Papiermasse erzeugt wird. Hierzu wird die feuchte Hülsenrohform auf eine beheizte Positivform gesetzt und durch Überschieben einer beheizten Negativform im Vakuum entwässert, gepresst, geglättet und getrocknet.

Ebenso ist aus der DE 43 24 272 C1 ein Verfahren zur Herstellung von Hohlkörpern als Füllmaterial für Verpackungszwecke bekannt, bei dem ein Papierfaserbrei zu einem Hohlprofilstrang extrudiert wird, der auf die Länge der Hohlkörper abgelängt wird.

Aus der Druckschrift DE 26 13 909 A1 ist ein Verfahren zur Herstellung von Behältnissen für kleine Gegenstände bekannt. Das Behältnis ist ein Extrudat, das durch das Pressen eines thermoplastischen Polymers durch eine Formdüse erzeugt wird. Die Formdüse weist zumindest einen Kern mit einer Mehrzahl von Vorsprüngen auf, der in ein Gehäuse eingesetzt einen Extruderkopf ausbildet. In diesen Extruderkopf wird geschmolzenes thermoplastisches Material gepresst. Dabei fließt es um den Kern herum und gelangt in die Schlitze zwischen den Dornen. Jeder Dorn weist in seinem Inneren einen Luftkanal auf, über den Luft derart zuführbar ist, dass mit fortschreitendem Auspressen ein Zusammenfallen der einzelnen Kanäle des Extrudats verhindert wird.

Nachteilig ist bei den aus dem Stand der Technik bekannten Verfahren zur maschinellen Herstellung von mehrere Hohlräume aufweisenden Kartonagenmaterialien, insbesondere Wellpappe eine Verklebung zumindest zweier Kartonagenbahnen erforderlich, welche die Produktion von derartigen wellpappeartigen Kartonagenmaterialen zeit- und kostenintensiv gestalteten.

Ausgehend vom dargelegten Stand der Technik ist es Aufgabe der Erfindung, eine neuartige Vorrichtung und ein zugehöriges Verfahren zur Herstellung zumindest eines mehrere Hohlräume aufweisenden bahnförmigen Pressmaterials, insbesondere eines Kartonagenmaterials zu schaffen, welche eine einfache und schnelle Herstellung eines bahnförmigen Pressmaterials, insbesondere eines wellpappeähnlichen Kartonagenmaterials ohne ein Verkleben von mehreren Kartonagenbahnen ermöglicht.

Diese Aufgabe wird ausgehend von den Merkmalen des jeweiligen Oberbegriffes der unabhängigen Patentansprüche 1 und 16 durch deren kennzeichnende Merkmale gelöst.

Der wesentliche Aspekt der erfindungsgemäßen Vorrichtung ist darin zu sehen, dass der Presskopfgehäuseabschnitt mehrere, entlang der Längsachse der Pressvorrichtung angeordnete Rohrelemente umschließt, deren in Richtung des Pressraums weisenden ersten freien Enden über Verbindungsrohre mit der zweiten Zuführungseinheit verbunden sind und dass die zweite Zuführungseinheit zur Zuführung eines gasförmigen oder flüssigen Mediums über die Verbindungsrohre in den Innenraum der Rohrelemente ausgebildet ist. Die Pressvorrichtung ist zum Pressen des in den Pressraum eingebrachten pressfähigen Kartonagengrundmaterials durch die zwischen den einzelnen Rohrelementen und dem Presskopfgehäuseabschnitt bestehenden Zwischenräume bei gleichzeitiger Zuführung des gasförmigen oder flüssigen Mediums über die vom Pressraum abgewandten zweiten freien Enden der Rohrelemente zur Erzeugung des vorzugsweise flachen bahnartigen Pressmaterials, insbesondere Kartonagenmaterials vorgesehen. Die Rohrelemente sind dabei als miteinander verbindbare Rohrelementmodule ausgebildet, die jeweils einen ersten, vom ersten freien Ende in Richtung des zweiten freien Endes trichterförmig zulaufenden Abschnitt und einen sich daran anschließenden zweiten Abschnitt aufweisen, wobei die zweiten Abschnitte bei Anordnung mehrerer Rohrelementmodule innerhalb des Presskopfgehäuseabschnitts eine Pressform des bahnartigen Pressmaterials vorgeben.

In einer vorteilhaften Weiterbildung der erfindungsgemäßen Vorrichtung ist eine Trocknungs- und Fördervorrichtung zur anschließenden Trocknung und Förderung des erzeugten vorzugsweise flachen, bahnartigen Pressmaterials, insbesondere Kartonagenmaterials vorgesehen.

Weiterhin betrifft die Erfindung ein Verfahren zur Herstellung zumindest eines mehrere Hohlräume aufweisenden bahnartigen Pressmaterials, insbesondere Kartonagenmaterials, bei dem ein pressfähiges Grundmaterial unter Druck einem Presskopfgehäuseabschnitt einer Pressvorrichtung zugeführt wird, der mehrere entlang der Längsachse der Pressvorrichtung angeordnete Rohrelemente umschließt, wobei das pressfähige Grundmaterial durch die von einer Anordnung aus mehreren einzelnen Rohrelementen in dem Presskopfgehäuseabschnitt gebildeten Zwischenräume bei gleichzeitiger Zuführung eines gasförmigen oder flüssigen Mediums über die Innenräume der Rohrelemente zur Erzeugung des bahnartigen Pressmaterials gepresst wird. Dabei wird zur Herstellung des bahnartigen Pressmaterials eine Vorrichtung gemäß einem der Ansprüche 1 bis 14 verwendet wird.

Vorteilhafte Weiterbildungen der erfindungsgemäßen Vorrichtung sind den weiteren abhängigen Patentansprüchen zu entnehmen.

Im Folgenden wird die Erfindung an einem Ausführungsbeispiel anhand von Zeichnungen näher beschrieben. Es zeigen:
- Fig. 1: beispielhaft eine perspektivische Seitenansicht der erfindungsgemäßen Vorrichtung zur Herstellung eines mehrere Hohlräume aufweisenden Kartonagenmaterials,
- Fig. 2: beispielhaft eine perspektivische Seitenansicht der Pressvorrichtung und der ersten und zweiten Zuführungseinheit,
- Fig. 3: beispielhaft eine perspektivische Seitenansicht des Presskopfgehäuseabschnittes,
- Fig. 4: beispielhaft eine perspektivische Seitenansicht der im Presskopfgehäuseabschnitt angeordneten Rohrelemente und Verbindungsrohre,
- Fig. 5: beispielhaft eine perspektivische Seitenansicht eines Rohrelementmoduls,
- Fig. 6: beispielhaft einen Schnitt durch das Rohrelementmodul gemäß Figur 5,
- Fig. 7: beispielhaft eine perspektivische Seitenansicht eines mehrere Hohlräume aufweisenden flachen Kartonagenmaterials,
- Fig. 8: beispielhaft in vergrößerter Ausschnittsdarstellung den Presskopfgehäuseabschnitt und die anschließende Trocknungs- und Fördervorrichtung,
- Fig. 9: beispielhaft eine Seitenansicht einer Fördereinheit der Trocknungs- und Fördervorrichtung,
- Fig. 10: beispielhaft eine Draufsicht auf die Oberseite des Fördergehäuses einer der Fördereinheiten,
- Fig. 11: beispielhaft eine Draufsicht auf die Unterseite des Fördergehäuses einer der Fördereinheiten,
- Fig. 12: beispielhaft eine perspektivische Seitenansicht des Fördergehäuses mit Absaugung und
- Fig. 13: beispielhaft eine perspektivische Seitenansicht eines Förderbandes.

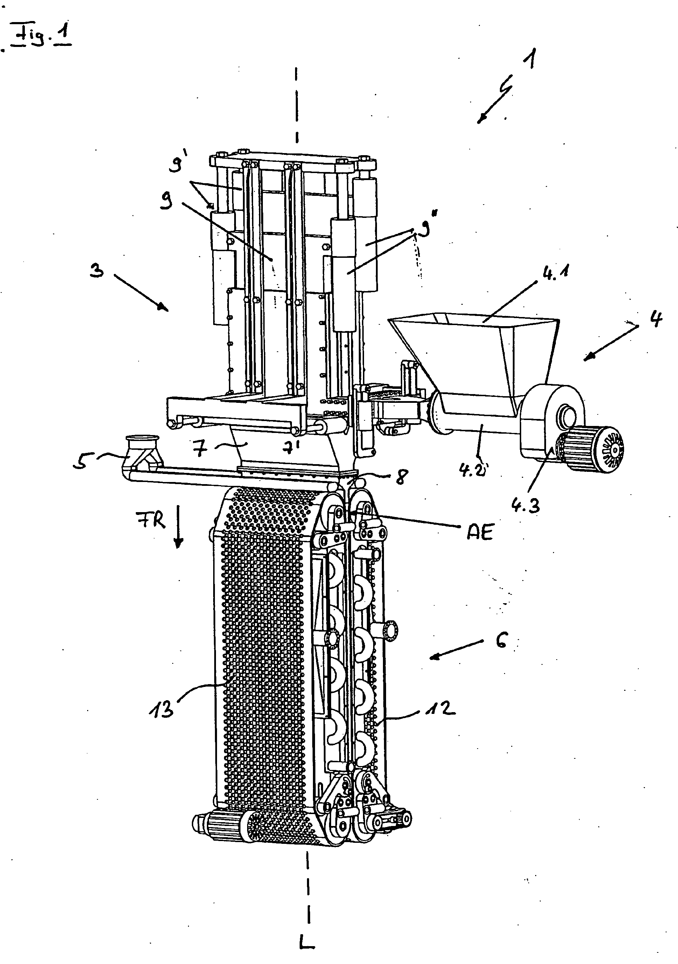

In Figur 1 ist mit 1 die erfindungsgemäße Vorrichtung bzw. Anordnung zur Herstellung zumindest eines mehrere Hohlräume 2' aufweisenden vorzugsweise flachen, bahnartigen Pressmaterials (2), insbesondere eines Kartonagenmaterials 2 bezeichnet.

Die erfindungsgemäße Vorrichtung 1 wird anschließend am Beispiel der Herstellung eines mehrere Hohlräume 2' aufweisenden bahnförmigen Kartonagenmaterials 2, welches vorzugsweise einen wabenartigen Querschnitt aufweist, beschrieben.

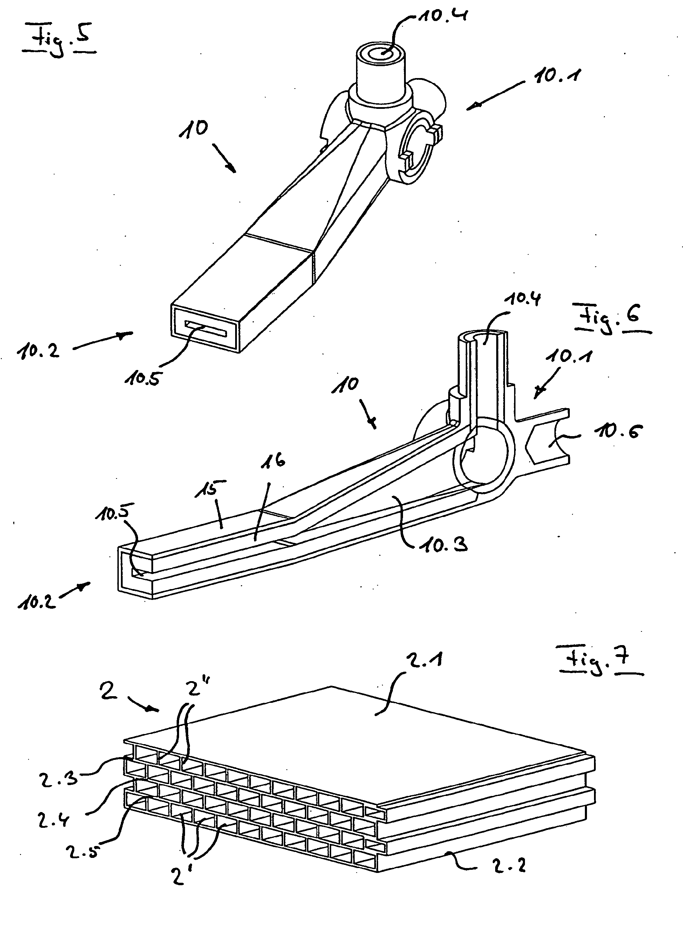

In Figur 7 ist beispielhaft ein derartiges, einen wabenartigen Querschnitt aufweisendes bahnartiges Kartonagenmaterial 2 schematisch dargestellt. Das bahnartige, vorzugsweise flache Kartonagenmaterial 2 weist eine jeweils glatte Ober- und Unterseite 2.1, 2.2 und dazwischen liegende Kartonagenschichten 2.3, 2.4., 2.5 auf, welche zur Ausbildung der Hohlräume 2' mittels einer Vielzahl von Verbindungsstegen 2" paarweise miteinander verbunden sind.

Die erfindungsgemäße Vorrichtung 1 ist jedoch keinesfalls auf die Herstellung eines derartigen flachen Kartonagenmaterials 2 beschränkt. Vielmehr kann die erfindungsgemäße Vorrichtung 1 auch zur Herstellung von mehrere Hohlräume 2' aufweisenden Pressmaterialien, insbesondere Waren im Lebensmittelsektor, beispielsweise Teig- oder Backwaren oder dergleichen eingesetzt werden, wobei ggf. die Hohlräume 2' zur Aufnahme eines Füllmaterials vorgesehen sein können.

Die erfindungsgemäße Vorrichtung 1 besteht im Wesentlichen aus einer Pressvorrichtung 3 und einer ersten und zweiten, jeweils mit der Pressvorrichtung 3 verbundenen Zuführungseinheit 4, 5. Die Pressvorrichtung 3 weist ein Pressraumgehäuse 7, ein Presswerk 9 sowie einen sich an das Pressraumgehäuse 7 anschließenden Presskopfgehäuseabschnitt 8 zum Pressen des bahnförmigen Pressmaterials, insbesondere Kartonagenmaterials 2 auf. Hierbei verfügt der Presskopfgehäuseabschnitt 8 über eine Zuführungsöffnung 8.1 und eine Presskopföffnung 8.2, wobei die Presskopföffnung 8.2 die Pressform bildet.

Das Pressraumgehäuse 7 der Pressvorrichtung 3 bildet zumindest einen Pressraum 7' aus, der über zumindest eine erste und zweite stirnseitige Öffnung 7.1, 7.2 des Pressraumgehäuses 7 zugänglich ist. An die erste stirnseitige Öffnung 7.1 ist das Presswerk 9 mit zumindest einem Druckkolben 9', 9" angeschlossen, welcher auf den zumindest einen Pressraum 7' des Pressraumgehäuses 7 einwirkt und ein darin befindliches pressfähiges Medium, vorzugsweise ein pressfähiges Grundmaterial entlang der Längsachse L in einer Förderrichtung FR, und zwar in Richtung der zweiten stirnseitigen Öffnung 7.2 presst. Als pressfähiges Medium bzw. Grundmaterial wird beispielsweise ein Papierfaserbrei, Kartonagenfaserbrei, Holzfaserbrei oder eine Mischung hieraus vorgesehen, welche die üblicherweise zur Kartonagenherstellung erforderlichen Inhaltsstoffe aufweist. Ebenso können ein pressfähiger Kunststoff oder ähnliche synthetische Materialen verwendet werden.

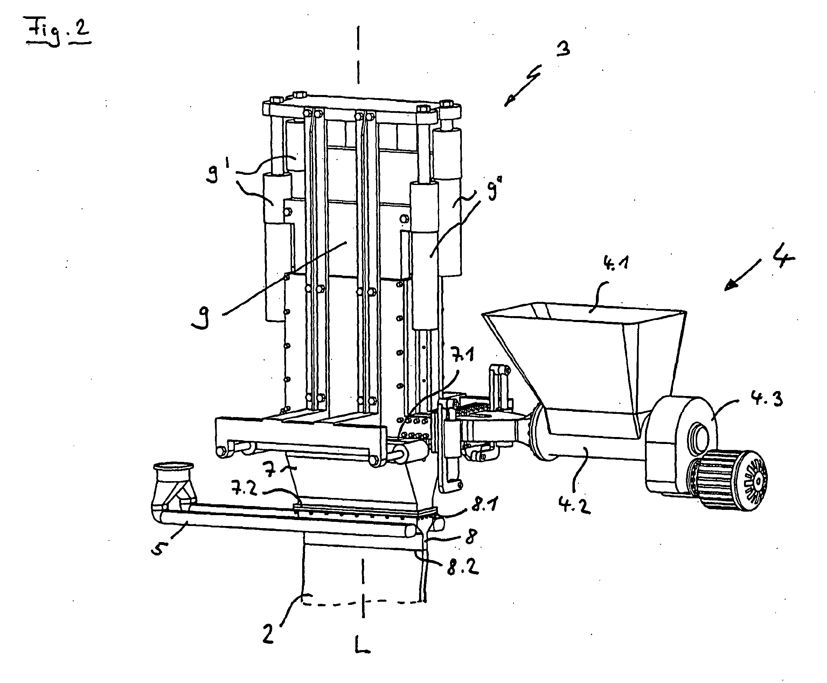

In einer bevorzugten Ausführungsform läuft das Pressraumgehäuse 7 von der ersten stirnseitigen Öffnung 7.1 zur zweiten stirnseitigen Öffnung 7.2 entlang der Längsachse L der Pressvorrichtung 3 trichterförmig zu. An der zweiten stirnseitigen Öffnung 7.2 ist das Pressraumgehäuse 7 mit der Zuführungsöffnung 8.1 des Presskopfgehäuseabschnittes 8 verbunden. Hierbei sind sowohl die zweite stirnseitige Öffnung 7.2 des Pressraumgehäuse 7 als auch die Zuführungsöffnung 8.1 des Presskopfgehäuseabschnittes 8 mit einem flanschartigen Rand versehen, welche im Verbindungsfall aneinander anliegen und über Befestigungsmittel fest miteinander verbunden sind. In dem Ausführungsbeispiel gemäß der Figuren 1, 2 und 8 sind die flanschartigen Ränder des Pressraumgehäuses 7 und des Presskopfgehäuseabschnittes 8 miteinander verschraubt.

Im Presskopfgehäuseabschnitt 8 ist eine Anordnung von mehreren, entlang der Längsachse L innerhalb des Presskopfgehäuseabschnittes 8 der Pressvorrichtung 3 verlaufenden Rohrelementen 10 vorgesehen, deren in Richtung des Pressraums 7' weisenden ersten freien Enden 10.1 über Verbindungsrohre 11 mit der außerhalb des Presskopfgehäuseabschnittes 8 angeordneten zweiten Zuführungseinheit 5 verbunden sind. Die Rohrelemente 10 weisen einen Führungskanal ausbildenden Innenraum 10.3 auf, welcher an dem ersten und zweiten Ende 10.1, 10.2 eine Ein- bzw. Auslassöffnung 10.4, 10.5 aufweist.

Die Verbindungsrohre 11 sind hierbei durch den Presskopfgehäuseabschnitt 8 geführt und bilden somit gemeinsam mit den Innenräumen 10.3 der Rohrelemente 10 geschlossene Führungskanäle zur zweiten Zuführungseinheit 5 aus, über welche beispielsweise ein gasförmiges oder flüssiges Medium, vorzugsweise unter Druck von der zweite Zuführungseinheit 5 an die zweiten freien Enden 10.2 der Rohrelemente 10 zugeführt werden kann. Gemäß Figur 5 und 6 sind die einzelnen Rohrelemente 10 als miteinander verbindbare Rohrelementmodule realisiert, deren erste freien Enden 10.1 bzw. Einlassöffnungen 10.4 bevorzugt jeweils miteinander verbindbar sind.

Zwischen den nebeneinander und übereinander angeordneten Rohrelementen 10 bilden sich an den zweiten freien Enden 10.2 mehrere Zwischenräume 10' ggf. unterschiedlicher Abmessungen und Form aus, welche vorzugsweise eine wabenartige Struktur innerhalb der Presskopföffnung 8.2 des Presskopfgehäuseabschnittes 8 und somit eine Pressform ausbilden. Die Abmessung und Anordnung der Zwischenräume definiert beispielsweise die Wandstärke der Verbindungsstege 2" und der einzelnen Kartonagenschichten 2.3, 2.4, 2.5 des zu erzeugenden bahnförmigen Pressmaterials bzw. des flachen Kartonagenmaterials.

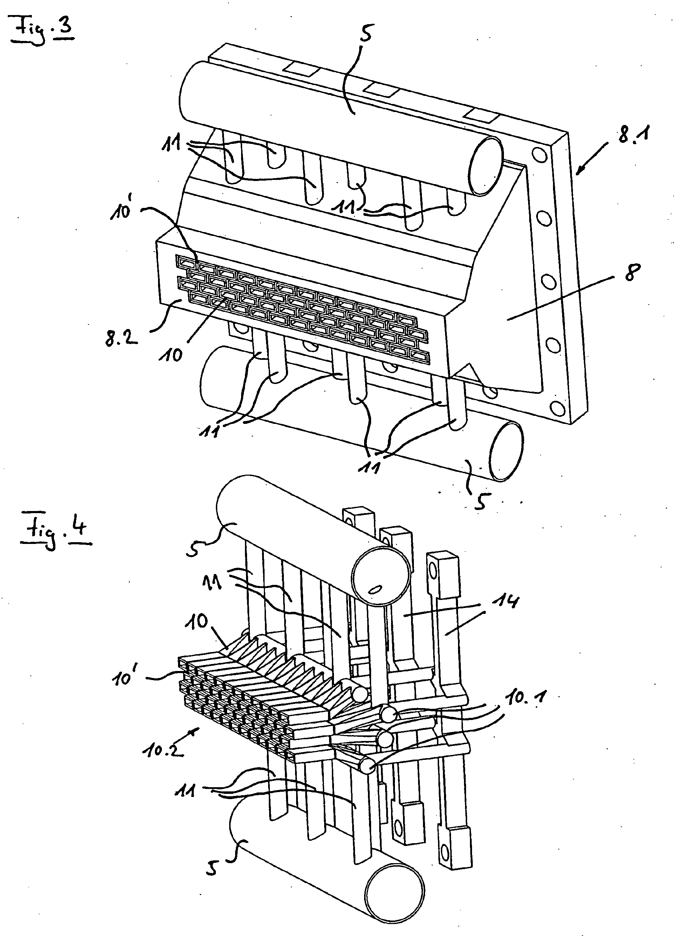

Hierbei sind die zweiten freien Enden 10.2 der Rohrelemente 10 in etwa bündig mit dem die Presskopföffnung 8.2 bildenden Rand des Presskopfgehäuseabschnittes 8 angeordnet. Die Rohrelemente 10 sind vorzugsweise derart nebeneinander und/oder untereinander angeordnet, dass die von diesen eingeschlossenen Zwischenräumen 10' mehrere, parallel zueinander angeordnete Rohrelementreihen bilden, wobei die Rohrelemente 10 einer Rohrelementreihe in Bezug auf die vorhergehende und nachfolgende Rohrelementreihe beispielsweise auf Lücke angeordnet sind. In Figur 3 und 4 ist beispielhaft die hierdurch erzeugte Anordnung der Rohrelemente 10 und die dadurch vorgegebene Pressform dargestellt.

Zur Zuführung eines pressfähigen Grundmaterials in den Pressraum 7' ist das Pressraumgehäuse 7 mit der ersten Zuführungseinheit 4 verbunden ist. Hierbei wird durch die erste Zuführungseinheit 4 das pressfähige, vorzugsweise breiartige Grundmaterial über einen Aufnahmetrichter 4.1 einem Förderkanal 4.2 zugeführt, über welchen das pressfähige, vorzugsweise breiartige Grundmaterial in den Pressraum 7' unter Druck eingebracht wird. Zur Förderung des über den Aufnahmetrichter 4.1 in den Förderkanal 4.2 eingebrachten Kartonagengrundmaterials ist eine Fördereinheit 4.3, beispielsweise in Form einer Förderschnecke oder dergleichen vorgesehen. Die zweite Zuführungseinheit 5 kann analog zur ersten Zuführungseinheit 4 ausgebildet sein und ebenfalls über einen Aufnahmetrichter, einen Förderkanal und eine Fördereinheit verfügen (nicht in den Figuren dargestellt).

Das derart in den Pressraum 7' eingebrachte pressfähige, vorzugsweise breiartige Grundmaterial wird anschließend mittels des Presswerks 9 bzw. dessen zumindest einen Druckkolben 9', 9" über den Pressraum 7' in die zwischen den Rohrelementen 10 bzw. den Rohrelementen 10 und dem diese umgebenden Presskopfgehäuseabschnitt 8 bestehenden Zwischenräume 10' über die Zuführungsöffnung 8.1 eingebracht und durch die Presskopföffnung 8.2 gepresst. In einer bevorzugten Ausführungsform sind die Druckkolben 9', 9" hydraulisch oder pneumatisch antreibbar.

Durch das Pressen des pressfähigen Grundmaterials durch die Anordnung der Rohrelemente 10 wird an der Presskopföffnung 8.2 ein bahnförmiges Pressmaterial bzw. eine fortlaufende Bahn eines vorzugsweise flachen Kartonagenmaterials 2 erzeugt. Durch die annähernd gleichzeitige Zuführung eines gasförmigen oder flüssigen Mediums, vorzugsweise Druckluft über die Innenräume 10.3 der Rohrelemente 10 werden in der erzeugten Bahn des Kartonagenmaterials 2 bereits während des Pressvorganges Höhlräume 2' eingebracht, welche das Pressmaterial bzw. das bahnförmige Kartonagenmaterial 2 einen beispielsweise wabenartigen Querschnitt verleihen, und zwar verlaufen die Hohlräume 2' bevorzugt jeweils annähernd parallel zu der glatten Ober- und Unterseite 2.1, 2.2 des flachen Kartonagenmaterial 2, und zwar entlang der Förderrichtung FR.

Das derart erzeugte Kartonagenmaterial 2 wird anschließend zur Trocknung und Förderung an eine Trocknungs- und Fördervorrichtung 6 übergeben, welche hierzu beispielsweise aus einer ersten und zweiten, parallel zueinander angeordneten Fördereinheit 12, 13 besteht, die zur Förderung des erzeugten Pressmaterials, vorzugsweise des bahnförmigen Kartonagenmaterials 2 entlang der Längsrichtung L ausgebildet sind. Mittels der Trocknungs- und Fördervorrichtung 6 wird das zumindest teilweise noch feuchte bahnförmige Kartonagenmaterial 2 schonend getrocknet und gleichzeitig von der Pressvorrichtung 3 in einer vorgegebenen Förderrichtung FR weggefördert und einer Weiterverarbeitung zugeführt.

In einer bevorzugten Ausführungsform sind die Rohrelemente 10 im Querschnitt quadratisch, rechteckförmig, oval oder rund ausgebildet und sind somit zur Erzeugung eines bahnförmigen Kartonagenmaterials 2 mit im Querschnitt quadratischen, rechteckförmigen, ovalen oder runden Hohlräumen 2' vorgesehen. Hierzu sind die in den Figuren 5 und 6 dargestellten Rohrelementmodule 10 gemäß der Figuren 3 und 4 zur Ausbildung einer Pressform miteinander verbunden, und zwar derart, dass über die Verbindungsrohre 11 in den Innenraum 10.3 jedes Rohrelementmoduls 10 das gasförmige oder flüssige Medium von der zweiten Zuführungseinheit 5 zuführbar ist.

Die Rohrelementmodule 10 und/oder die Verbindungsrohre 11 sind hierbei mittels einer Strebenanordnung 14 am Presskopfgehäuseabschnitt 8 fixierbar. Beispielsweise ist zur Montage der Rohrelementmodule 10 an der Strebenanordnung 14 im Bereich des jeweils ersten freien Endes 10.1 eines Rohrelementmoduls 10 eine Ausnehmung 10.6 zur Aufnahme eines Strebenelements der Strebenanordnung 14 vorgesehen. Die Rohrelementmodule 10 sind ferner mittels der Verbindungsrohre 11 am Presskopfgehäuseabschnitt 8 fixiert.

In einer bevorzugten Ausführungsform sind die Rohrelementmodule 10 im Randbereich der Presskopföffnung 8.2 leicht überlappend angeordnet, so dass an den Längsseiten des erzeugten bahnförmigen Kartonagenmaterials 2 einzelne Verbindungselemente nach Art Nut und Feder entstehen. Werden aus der erzeugten Bahn des bahnförmigen Kartonagenmaterials 2 einzelne Platten gefertigt, so können diese vorteilhaft an Ihren Längsseiten miteinander verbunden werden, und zwar durch ein formschlüssiges Ineinandergreifen der erzeugten Nut- und Feder-Verbindungselemente.

Zusätzlich kann das in den Innenraum 10.3 jedes Rohrelementmodul 10 eingeführte gasförmige oder flüssige Medium gekühlt werden, so dass das vom Pressraum 7' entlang der Verbindungsrohre 11 bzw. der mit diesen verbundenen Rohrelementmodulen 10 gepresste, vorzugsweise warme Grundmaterial zusätzlich gekühlt wird. Hierdurch wird eine zusätzliche Stabilisierung der Form des gepressten bahnförmigen Kartonagenmaterials 2 erreicht.

Der Aufbau des Presskopfgehäuseabschnittes 9 bzw. der darin angeordneten Rohrelemente 10 ist beispielsweise den Figuren 3 und 4 zu entnehmen. Figur 6 zeigt beispielhaft einen Längsschnitt durch ein Rohrelementmodul 10 gemäß der Figur 5, welches vorzugsweise im Bereich der Presskopföffnung 8.2, d.h. am zweiten freien Ende 10.2 einen rechteckförmigen Querschnitt bzw. eine rechteckförmige Auslassöffnung 10.5 aufweist.

Ferner weist das Rohrelementmodul 10 einen vom ersten freien Ende 10.1 in Richtung des zweiten freien Endes 10.2 trichterförmig zulaufenden Abschnitt auf, an welchen sich ein leicht konusförmig zulaufender Abschnitt anschließt, d.h. der der Presskopföffnung 8.2 zugewandte Abschnitt des Rohrelementmoduls 10 weist jeweils annähernd parallel zueinander verlaufende Gehäuseaußenwände auf, die schließlich durch die erfindungsgemäße Anordnung mehrerer derartiger Rohrelementmodule 10 innerhalb des Presskopfgehäuseabschnittes 9 die Pressform vorgegeben. Ebenso ist der vom jeweiligen Rohrelementmodul 10 eingeschlossene Innenraum 10.3 zumindest abschnittsweise trichterförmig bzw. konusförmig zulaufend ausgebildet.

Das Rohrelementmodul 10 kann beispielsweise ein- oder mehrschichtig ausgebildet sein. Bei einer zweischichtigen Ausbildung ist eine äußere wärmeleitende Schicht 15 und eine sich daran anschließende innere wärmeisolierende Schicht 16 vorgesehen. Die äußere wärmeleitende Schicht 15 kann beispielsweise aus Metall oder einem anderem wärmeleitfähigen Material hergestellt sein und die innere wärmeisolierende Schicht 16 beispielsweise aus einem wärmeisolierenden Material wie beispielsweise Asbest oder einem kohlenstoffhaltigen Material gefertigt sein.

Anstelle von Luft kann in die im Kartonagenmaterial 2 während des Pressvorgangs entstehenden Hohlräumen 2' als gasförmiges oder flüssiges Medium auch Schaumstoff, Kunststoff oder ein ähnliches Füllmaterial eingefüllt werden, welches wiederum über die zweite Zuführungseinheit 5 und den durch die Rohrelemente 10 und Verbindungsrohre 11 gebildeten Führungskanäle unter Druck im Rahmen des Pressvorgangs zugeführt wird.

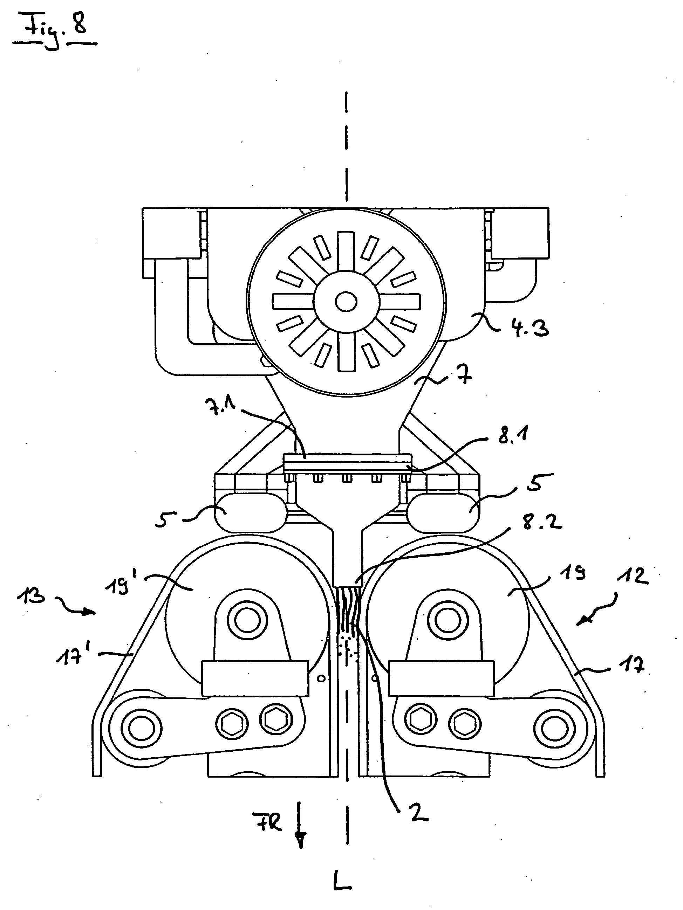

Die weitere Trocknung des durch die Pressvorrichtung 3 erzeugten bahnförmigen Kartonagenmaterials 2 erfolgt mittels der Trocknungs- und Fördervorrichtung 6. Hierzu schließen sich gemäß Figur 8 die erste und zweite, parallel zur Längsachse L der Pressvorrichtung L angeordnete Fördereinheit 12, 13 unmittelbar an die Presskopföffnung 8.2 des Presskopfgehäuseabschnittes 8 an bzw. nehmen diese teilweise zwischen ihren Förderbändern 17, 17' auf.

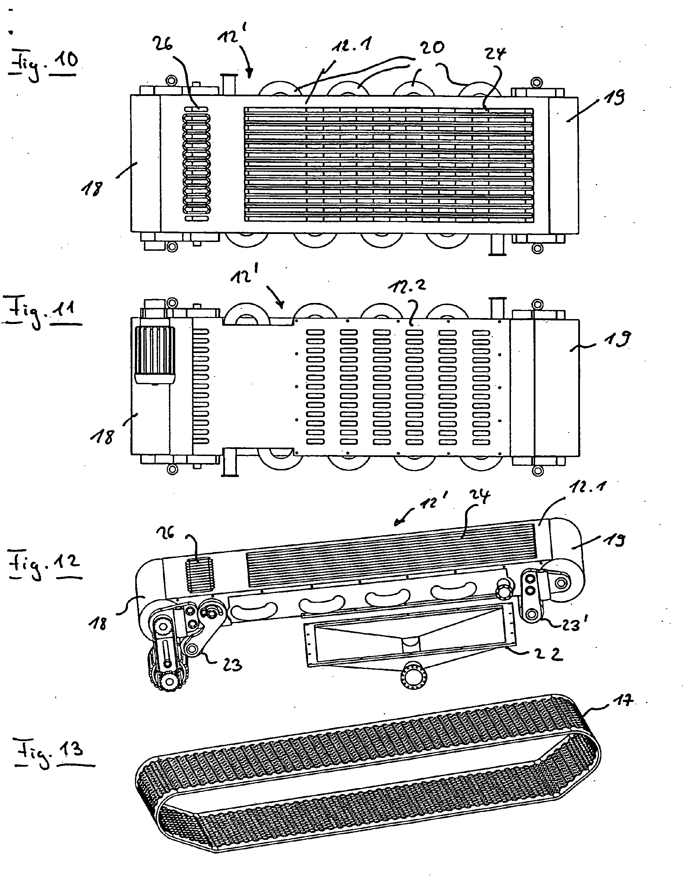

Die erste und zweite Fördereinheit 12, 13 verfügen über jeweils ein Förderband 17, 17', das jeweils über eine Antriebsrolle 18, 18' angetrieben und mittels einer Umlenkrolle 19, 19' an einer die Ausgangsöffnung 8.2 umgebenden Aufnahmestelle AE umgelenkt wird. Die Antriebs- bzw. Umlenkachsen der Antriebsrollen 18, 18' bzw. Umlenkrollen 19, 19' verlaufen hierbei parallel zueinander sowie senkrecht zur Längsachse L der Vorrichtung 1 und sind vorzugsweise in einer gemeinsamen Ebene angeordnet. Ferner sind die Antriebsrollen 18, 18' bzw. Umlenkrollen 19, 19' an den stirnseitigen Enden eines vorzugsweise rechteckförmigen, länglichen Fördergehäuses 12', 13' mittels geeigneter Haltemittel befestigt. Das Fördergehäuse 12', 13' weist jeweils eine Ober- und eine Unterseite 12.1, 13.1 bzw. 12.2, 13.2 auf, wobei die jeweilige Oberseite 12.1, 13.1 zum aufzunehmenden Förderguts, insbesondere des zu trocknende bahnförmige Kartonagenmaterial 2 hin weist. In Figur 10 und 11 ist beispielsweise eine Draufsicht auf die Oberseite 12.1 und die Unterseite 12.2 der ersten Fördereinheit 12 dargestellt.

Gemäß der in Figur 12 dargestellten Ausführungsform wird das Förderband 17 an der Unterseite 12.2 des Fördergehäuses 12' über zumindest zwei weitere Umlenkrollen 23, 23' umgelenkt, die jeweils leicht schräg nach innen versetzt sind. Hierdurch entsteht ein Luftraum zwischen der Unterseite 12.2, 13.2 des Fördergehäuses 12', 13' und dem umlaufenden Förderband 17, 17', in dem eine Absaugung 22 angeordnet wird.

Das zu trocknende bahnförmige Kartonagenmaterial 2 wird jeweils mit der glatten Ober- bzw. Unterseite 2.1, 2.2 von den auf den entlang der Oberseiten 12.1, 13.1 geführten Förderbändern 17, 17' aufgenommen und somit durch die zueinander weisenden Förderflächen der Förderbänder 17, 17' der ersten und zweiten Fördereinheit 12, 13 in Förderrichtung FR geführt. Hierzu wird das an den Förderflächen der Förderbändern 17, 17' anliegende bahnförmige Kartonagenmaterial 2 mittels der Absaugung 22 zumindest leicht angesaugt und annähernd gleichzeitig mittels unterhalb der Förderbänder 17, 17' in der jeweiligen Fördereinheit 12, 13 vorgesehener Heizmodule 20 das gesamte Fördergehäuse 12', 13', insbesondere deren Oberseiten 12.1, 13.1 beheizt. Das jeweilige Förderband 17, 17' weist zum Ansaugen des bahnförmigen Kartonagenmaterials 2 sowie zur Abführung der Feuchtigkeit in einer bevorzugten Ausführungsform eine Vielzahl von Ausnehmungen 21 aus oder ist aus einem luftdurchlässigen Material hergestellt. Ferner sind an der Oberseite 12.1, 13.1 mehrere, parallel zueinander in Förderrichtung FR verlaufende Ansaugschienen 24 vorgesehen, welches sich nahezu über 2/3 der gesamten Länge des Fördergehäuses 12', 13' erstrecken und über im Querschnitt langlochförmige Verbindungskanäle 25 mit der Absaugung 22 verbunden sind, wobei die langlochförmige Verbindungskanäle 25 jeweils einzelner entlang einer senkrecht zur Längsachse L verlaufenden Geraden sich von der Unterseite 12.2, 13.2 des Fördergehäuses 12', 13' zu dessen Oberseite 12.1, 13.1 erstrecken. Das an der Oberseite 12.1, 13.1 angesaugte bahnförmige Kartonagenmaterial 2 wird somit mit dem Förderband 17 in Förderrichtung FR mitbewegt.

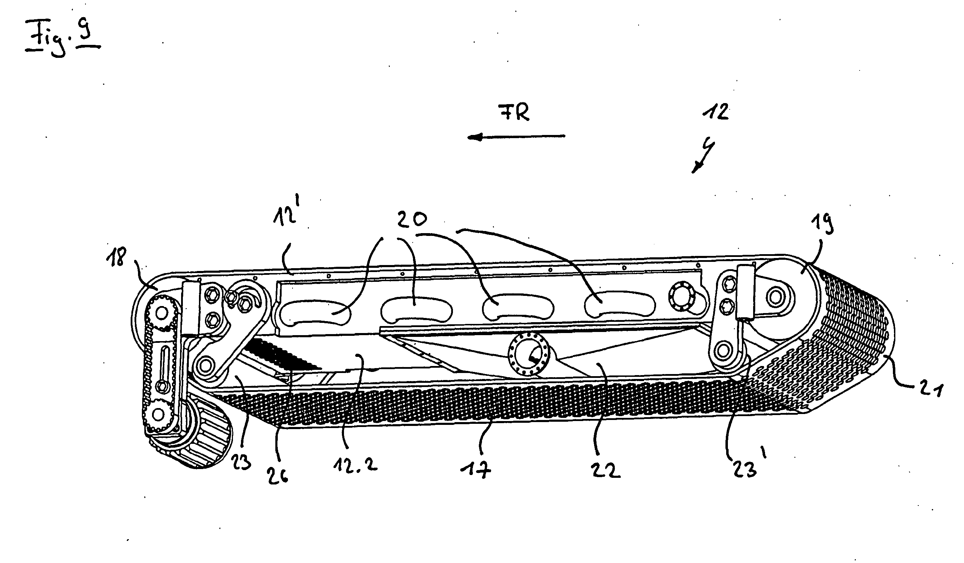

In Figur 9 ist beispielhaft eine perspektivische Seitenansicht der ersten Fördereinheit 12 mit aufgezogenem Förderband 17 und in Figur 12 ohne Förderband 17 mit abgenommener Absaugung 22 dargestellt. Das verwendete Förderband 17 weist eine Vielzahl von Ausnehmungen 21 auf und wird über die Antriebsrolle 18 angetrieben sowie über die Umlenkrolle 19 an der stirnseitigen Aufnahmestelle AE umgelenkt.

Das in der ersten Fördereinheit 12 vorgesehene Heizmodul 20 ist beispielsweise durch ein wendelartig innerhalb des Fördergehäuses 12' angeordnetes Heizrohr gebildet, welches sich in Förderrichtung FR erstreckt und in einer parallel zur Förderfläche verlaufenden Ebene vorgesehen ist. Die im Querschnitt langlochförmige Verbindungskanäle 25 verlaufen hierbei zwischen den einzelnen geradlinigen Streckenabschnitten des wendelartig angeordneten Heizrohres. Dem wendelartig angeordneten Heizrohr wird über eine nicht dargestellte Wärmequelle vorzugsweise Warmluft oder eine warme Flüssigkeit zugeführt.

Mit der an der Unterseite 12.2, 13.2 des Fördergehäuses 12', 13' angeordneten vorzugsweise trichterförmigen Absaugung 22 wird neben der Ansaugung des Fördergutes zusätzlich die frei werdende Feuchtigkeit bzw. das im Rahmen des Trocknungsvorgangs frei werdende Feuchtigkeits-/Wassergemisch abgesaugt, und zwar über die Verbindungskanäle 25 und die im Förderband 17 vorgesehenen Ausnehmungen 21.

In einer vorteilhaften Ausführungsform kann am Ausgang der jeweiligen ersten und zweiten Fördereinheit 12, 13 bzw. der Trocknungs- und Fördervorrichtung 6 zum Lösen des zwischen dem bahnartigen Kartonagenmaterials 2 und der Oberseite 12.1, 13.1 erzeugten Vakuums eine Ablöseschiene 26 vorgesehen sein, welche beispielsweise durch mehrere parallel zueinander in einer Reihe angeordnete Ablösekanäle gebildet ist. Zusätzlich kann über die Ablösekanäle von der Unterseite 12.2, 13.2 geeignete Abluft an das Förderband 17, 17' geführt werden, wodurch ein erleichtertes Lösen des bahnförmigen Kartonagenmaterials 2 von den Förderbändern 17, 17' bewirkt wird.

Beispielsweise können durch eine entsprechende Anordnung der Rohrelemente 10 auch rohrförmige, d.h. im Querschnitt runde oder polygonartige Kartonagenmaterialien hergestellt werden, dessen Kartonagenwände wiederum eine wabenartige Struktur aufweisen, d.h. mehrere Hohlräume 2' umfassen.

### Bezugszeichenliste

- 1: Vorrichtung
- 2: Pressmaterial bzw. Kartonagenmaterial
- 2.1: Oberseite
- 2.2: Unterseite
- 2.3 - 2.5: Kartonagenschichten
- 2': Hohlräume
- 2": Verbindungsstege
- 3: Pressvorrichtung
- 4: erste Zuführungseinheit
- 4.1: Aufnahmetrichter
- 4.2: Förderkanal
- 4.3: Fördereinheit
- 5: zweite Zuführungseinheit
- 6: Trocknungs- und Fördervorrichtung
- 7: Pressraumgehäuse
- 7.1: erste stirnseitige Öffnung
- 7.2: erste stirnseitige Öffnung
- 7': Pressraum
- 8: Presskopfgehäuseabschnitt
- 8.1: Zuführungsöffnung
- 8.2: Presskopföffnung
- 9: Presswerk
- 9', 9": Druckkolben
- 10: Rohrelemente
- 10.1: erstes freies Ende
- 10.2: zweites freies Ende
- 10.3: Innenraum
- 10.4: Einlassöffnung
- 10.5: Auslassöffnung
- 10.6: Ausnehmung
- 10': Zwischenräume
- 11: Verbindungsrohre
- 12: erste Fördereinheit
- 12': Fördergehäuse
- 13: zweite Fördereinheit
- 13': Fördergehäuse
- 14: Strebenanordnung
- 15: äußere wärmeleitende Schicht
- 16: innere wärmeisolierende Schicht
- 17, 17': Förderband
- 18, 18': Antriebsrollen
- 19, 19': Umlenkrollen
- 20, 20': Heizmodule
- 21, 21': Ausnehmungen
- 22: Absaugung
- 23, 23': weitere Umlenkrollen
- 24: Ansaugschienen
- 25: Verbindungskanäle
- 26: Ablöseschiene

- L: Längsachse
- FR: Förderrichtung
- AE: Aufnahmestelle

## Patentansprüche

1. Vorrichtung zur Herstellung zumindest eines mehrere Hohlräume (2') aufweisenden bahnartigen Pressmaterials (2), insbesondere eines Kartonagenmaterials, bestehend aus einer Pressvorrichtung (3) und einer ersten und zweiten, jeweils mit der Pressvorrichtung (3) verbundenen Zuführungseinheit (4, 5), bei der die Pressvorrichtung (3) zumindest ein einen Pressraum (7') einschließendes Pressraumgehäuse (7) aufweist, an welches sich ein Presskopfgehäuseabschnitt (8) anschließt und bei der die erste Zuführungseinheit (4) zur Zuführung eines pressfähigen Grundmaterials in den Pressraum (7') vorgesehen ist,
wobei der Presskopfgehäuseabschnitt (8) mehrere, entlang der Längsachse (L) der Pressvorrichtung (3) angeordnete Rohrelemente (10) umschließt, deren in Richtung des Pressraums (7') weisenden ersten freien Enden (10.1) über Verbindungsrohre (11) mit der zweiten Zuführungseinheit (5) verbunden sind,
wobei die zweite uführungseinheit (5) zur Zuführung eines gasförmigen oder flüssigen Mediums über die Verbindungsrohre (11) in einen Innenraum (10.3) der Rohrelemente (10) ausgebildet ist,
und wobei die Pressvorrichtung (3) zum Pressen des in den Pressraum (7') eingebrachten pressfähigen Grundmaterials durch die zwischen den einzelnen Rohrelementen (10) und dem Presskopfgehäuseabschnitt (8) bestehenden Zwischenräume (10') bei gleichzeitiger Zuführung des gasförmigen oder flüssigen Mediums an die vom Pressraum (7') abgewandten zweiten freien Enden (10.2) der Rohrelemente (10) zur Erzeugung des bahnartigen Pressmaterials (2) vorgesehen ist,
**dadurch gekennzeichnet,**
**dass** die Rohrelemente (10) als miteinander verbindbare Rohrelementmodule ausgebildet sind, die jeweils einen ersten, vom ersten freien Ende (10.1) in Richtung des zweiten freien Endes (10.2) trichterförmig zulaufenden Abschnitt und einen sich daran anschließenden zweiten Abschnitt aufweisen, wobei die zweiten Abschnitte bei Anordnung mehrerer Rohrelementmodule innerhalb des Presskopfgehäuseabschnitts (8) eine Pressform des bahnartigen Pressmaterials (2) vorgeben.

2. Vorrichtung nach Anspruch 1, **dadurch gekennzeichnet, dass** eine Trocknungs- und Fördervorrichtung (6) zur Trocknung und Förderung des erzeugten bahnartigen Pressmaterials (2) vorgesehen ist.

3. Vorrichtung nach Anspruch 1 oder 2, **dadurch gekennzeichnet, dass** das Pressraumgehäuse (7) eine erste und zweite stirnseitige Öffnung (7.1, 7.2) aufweist und entlang der Längsachse (L) der Pressvorrichtung (3) von der ersten stirnseitigen Öffnung (7.1) zur zweiten stirnseitigen Öffnung (7.2) trichterförmig zuläuft.

4. Vorrichtung nach einem der Ansprüche 1 bis 3, **dadurch gekennzeichnet, dass** der Presskopfgehäuseabschnitt (8) eine Zuführungsöffnung (8.1) und eine Presskopföffnung (8.2) aufweist.

5. Vorrichtung nach Anspruch 3 und 4, **dadurch gekennzeichnet, dass** die zweite stirnseitige Öffnung (7.2) des Pressraumgehäuses (7) mit der Zuführungsöffnung (8.1) des Presskopfgehäuseabschnittes (8) verbunden ist.

6. Vorrichtung nach Anspruch 4 oder 5, **dadurch gekennzeichnet, dass** die zweiten freien Enden (10.2) der Rohrelemente (10) in etwa bündig mit dem die Presskopföffnung (8.2) bildenden Rand des Presskopfgehäuseabschnittes (8) angeordnet sind.

7. Vorrichtung nach einem der Ansprüche 1 bis 6, **dadurch gekennzeichnet, dass** die Rohrelemente (10) im Querschnitt quadratisch, rechteckförmig, polygonartig, oval oder rund ausgebildet sind.

8. Vorrichtung nach einem der Ansprüche 1 bis 7, **dadurch gekennzeichnet, dass** der von jeweils einem Rohrelementmodul (10) eingeschlossene Innenraum (10.3) abschnittsweise trichterförmig oder konusförmig zulaufend ausgebildet ist.

9. Vorrichtung nach einem der Ansprüche 1 bis 7, **dadurch gekennzeichnet, dass** ein Rohrelement (10) ein- oder mehrschichtig ausgebildet ist.

10. Vorrichtung nach Anspruch 9, **dadurch gekennzeichnet, dass** ein Rohrelement (10) zumindest eine äußere wärmeleitende Schicht (15) und innere wärmeisolierende Schicht (16) aufweist.

11. Vorrichtung nach Anspruch 10, **dadurch gekennzeichnet, dass** die äußere wärmeleitende Schicht (15) aus einem wärmeleitfähigen Material, insbesondere Metall und die innere wärmeisolierende Schicht (16) aus einem wärmeisolierenden Material, insbesondere einem kohlenstoffhaltigen Material hergestellt ist.

12. Vorrichtung nach einem der Ansprüche 2 bis 10, **dadurch gekennzeichnet, dass** die Trocknungs- und Fördervorrichtung (6) zumindest eine erste und zweite Fördereinheit (12, 13) mit jeweils einem Förderband (17, 17'), eine Antriebsrolle (18, 18') und eine Umlenkrolle (19, 19') aufweist.

13. Vorrichtung nach Anspruch 12, **dadurch gekennzeichnet, dass** das jeweilige Förderband (17, 17') eine Vielzahl von Ausnehmungen (21) aufweist oder aus einem luftdurchlässigen Material hergestellt ist.

14. Vorrichtung nach einem der Ansprüche 1 bis 13, **dadurch gekennzeichnet, dass** als pressfähiges Grundmaterial ein Kartonagenbrei, Papierbrei, Kunststoff, Holzfaserbrei oder eine Mischung hieraus vorgesehen ist.

15. Vorrichtung nach einem der Ansprüche 1 bis 12, **dadurch gekennzeichnet, dass** die Vorrichtung zur Herstellung von mehrere Hohlräume (2') aufweisenden bahnartigen Waren im Lebensmittelsektor, beispielsweise Teig- oder Backwaren ausgebildet ist.

16. Verfahren zur Herstellung zumindest eines mehrere Hohlräume (2') aufweisenden bahnartigen Pressmaterials (2), insbesondere eines Kartonagenmaterials, bei dem ein pressfähiges Grundmaterial unter Druck einem Presskopfgehäuseabschnitt (8) einer Pressvorrichtung (3) zugeführt wird, der mehrere, entlang der Längsachse der Pressvorrichtung angeordnete Rohrelemente umschließt, wobei das pressfähige Grundmaterial durch die von einer Anordnung aus mehreren einzelnen Rohrelementen (10) in dem Presskopfgehäuseabschnitt (8) gebildeten Zwischenräume (10') bei gleichzeitiger Zuführung eines gasförmigen oder flüssigen Mediums über die Innenräume (10.3) der Rohrelemente (10) zur Erzeugung des bahnartigen Pressmaterials (2) gepresst wird, **dadurch gekennzeichnet, dass** zur Herstellung des bahnartigen Pressmaterials (2) eine Vorrichtung gemäß einem der Ansprüche 1 bis 14 verwendet wird.

## Claims

1. Device for manufacturing at least one web-type pressed material (2) containing several hollow cavities (2'), more particularly a cardboard packing material, consisting of a pressing device (3) and a first and second feed unit (4, 5) each connected to the pressing device (3) wherein the pressing device (3) has at least one pressing room housing (7) enclosing a pressing room (7') and adjoined by a pressing head housing section (8) and wherein the first feed unit (4) is provided for feeding a pressable raw material into the pressing room (T),
wherein the pressing head housing section (8) encloses several tubular elements (10) which are arranged along the longitudinal axis (L) of the pressing device (3) and whose first free ends (10.1) pointing in the direction of the pressing room (7') are connected to the second feed unit (5) by connecting tubes (11),
wherein the second feed unit (5) is designed for supplying a gaseous or fluid medium via the connecting tubes (11) into an interior space (10.3) of the tubular elements (10), and wherein the pressing device (3) is provided for pressing the pressable raw material introduced into the pressing room (T) through the interspaces (10') existing between the individual tubular elements (10) and the pressing head housing section (8) whilst simultaneously supplying the gaseous or fluid medium up to the second free ends (10.2) of the tubular elements (10) remote from the pressing room (T) in order to produce the web-type pressed material (2),
**characterised in that** the tubular elements (10) are designed as interconnectable tubular element modules which each have a first section tapering funnel-shaped from the first free end (10.1) in the direction of the second free end (10.2), and an adjoining second section wherein the second sections with the arrangement of several tubular element modules inside the pressing head housing section (8) provide a pressing mould of the web-type pressed material (2).

2. Device according to claim 1 **characterised in that** a drying and conveying device (6) is provided for drying and conveying the web-type pressed material (2) which has been produced.

3. Device according to claim 1 or 2 **characterised in that** the pressing room housing (7) has a first and a second opening (7.1, 7.2) at the ends and tapers funnel-shaped along the longitudinal axis (L) of the pressing device (3) from the first end opening (7.1) to the second end opening (7.2).

4. Device according to one of claims 1 to 3 **characterised in that** the pressing head housing section (8) has a supply opening (8.1) and a pressing head opening (8.2).

5. Device according to claim 3 and 4 **characterised in that** the second end opening (7.2) of the pressing room housing (7) is connected to the supply opening (8.1) of the pressing head housing section (8).

6. Device according to claim 4 or 5 **characterised in that** the second free ends (10.2) of the tubular elements (10) are arranged substantially flush with the edge of the pressing head housing section (8) which forms the pressing head opening (8.2).

7. Device according to one of claims 1 to 6 **characterised in that** the tubular elements (10) are designed with a square, rectangular, polygonal, oval or circular cross-section.

8. Device according to one of claims 1 to 7 **characterised in that** the interior space (10.3) enclosed by each one tubular element module (10) is designed in sections to taper funnel-shaped or conical.

9. Device according to one of claims 1 to 7 **characterised in that** one tubular element (10) is designed single or multi-layered.

10. Device according to claim 9 **characterised in that** one tubular element (10) has at least one outer heat-conducting layer (15) and one inner heat-insulating layer (16).

11. Device according to claim 10 **characterised in that** the outer heat-conducting layer (15) is made from a heat-conductible material, more particularly metal and the inner heat-insulating layer (16) is made from a heat-insulating material, more particularly a carbon-containing material.

12. Device according to one of claims 2 to 10 **characterised in that** the drying and conveying device (6) comprises at least a first and a second conveying unit (12,13) each with a conveyor belt (17, 17'), a drive roller (18, 18') and a guide roller (19,19').

13. Device according to claim 12 **characterised in that** the relevant conveyor belt (17, 17') has a number of recesses (21) or is made from an air-permeable material.

14. Device according to one of claims 1 to 13 **characterised in that** a cardboard pulp, paper pulp, plastics, wooden fib re pulp or a mixture thereof is provided as the pressable raw material.

15. Device according to one of claims 1 to 12 **characterised in that** the device is designed for manufacturing web-type goods having several hollow cavities (2') for use in the foods sector, by way of example dough or bakery products.

16. Method for manufacturing at least one web-type pressed material (2) having several hollow cavities (2'), more particularly a cardboard packaging material, wherein a pressable raw material is supplied under pressure to a pressing head housing section (8) of a pressing device (3) which encloses several tubular elements arranged along the longitudinal axis of the pressing device, wherein the pressable raw material is pressed through interspaces (10') formed by an arrangement of several individual tubular elements (10) in the pressing head housing section (8), with the simultaneous supply of a gaseous or fluid medium via the interior spaces (10.3) of the tubular elements (10) to produce the web-type pressed material (2), **characterised in that** a device according to one of claims 1 to 14 is used to manufacture the web-type pressed material (2).

## Revendications

1. Dispositif de fabrication d'au moins un matériau comprimé (2) du type bande comportant plusieurs espaces creux (2'), en particulier d'un matériau de cartonnage, constitué d'un dispositif de pressage (3) et d'une première et d'une deuxième unités d'alimentation (4, 5), respectivement reliées au dispositif de pressage (3), le dispositif de pressage (3) comportant au moins un carter de chambre de pressage (7) renfermant une chambre de pressage (7') et auquel se raccorde une partie de carter de tête de pressage (8), et la première unité d'alimentation (4) étant prévue pour apporter dans la chambre de pressage (7') un matériau de base comprimable,
la partie de carter de tête de pressage (8) renfermant plusieurs éléments tubulaires (10), disposés le long de l'axe longitudinal (L) du dispositif de pressage (3) et dont les extrémités libres (10.1) dirigées vers la chambre de pressage (7') sont reliées par l'intermédiaire de tubes de liaison (11) à la deuxième unité d'alimentation (5),
la deuxième unité d'alimentation (5) étant conçue pour apporter un milieu gazeux ou liquide par l'intermédiaire des tubes de liaison (11) dans un espace intérieur (10.3) des éléments tubulaires (10), et le dispositif de pressage (3) étant prévu pour, afin de produire le matériau comprimé (2) du type bande, comprimer le matériau de base comprimable introduit dans la chambre de pressage (7') par les espaces intermédiaires (10') présents entre les éléments tubulaires (10) individuels et la partie de carter de tête de pressage (8), avec apport simultané du milieu gazeux ou liquide aux deuxièmes extrémités libres (10.2) des éléments tubulaires (10), opposées à la chambre de pressage (7'),
**caractérisé en ce que** les éléments tubulaires (10) sont réalisés sous forme de modules d'éléments tubulaires pouvant être reliés entre eux, comportant chacun une première partie s'étendant en entonnoir depuis la première extrémité libre (10.1) vers la deuxième extrémité libre (10.2) et une deuxième partie raccordée à la première partie, les deuxièmes parties prédéfinissant, lorsque plusieurs modules d'éléments tubulaires sont disposés à l'intérieur de la partie de carter de tête de pressage (8), une forme comprimée du matériau comprimé (2) du type bande.

2. Dispositif selon la revendication 1, **caractérisé en ce qu'**un dispositif de séchage et de transport (6) est prévu pour sécher et transporter le matériau comprimé (2) fabriqué du type bande.

3. Dispositif selon la revendication 1 ou 2, **caractérisé en ce que** le carter de chambre de pressage (7) comporte une première et une deuxième ouvertures frontales (7.1, 7.2) et s'étend en entonnoir le long de l'axe longitudinal (L) du dispositif de pressage (3) depuis la première ouverture frontale (7.1) vers la deuxième ouverture frontale (7.2).

4. Dispositif selon l'une quelconque des revendications 1 à 3, **caractérisé en ce que** la partie de carter de tête de pressage (8) comporte une ouverture d'alimentation (8.1) et une ouverture de tête de pressage (8.2).

5. Dispositif selon les revendications 3 et 4, **caractérisé en ce que** la deuxième ouverture frontale (7.2) du carter de chambre de pressage (7) est reliée à l'ouverture d'alimentation (8.1) de la partie de carter de tête de pressage (8).

6. Dispositif selon la revendication 4 ou 5, **caractérisé en ce que** les deuxièmes extrémités libres (10.2) des éléments tubulaires (10) sont disposées environ à fleur du bord formant l'ouverture de tête de pressage (8.2) de la partie de carter de tête de pressage (8).

7. Dispositif selon l'une quelconque des revendications 1 à 6, **caractérisé en ce que** les éléments tubulaires (10) sont réalisés de section carrée, rectangulaire, polygonale, ovale ou ronde.

8. Dispositif selon l'une quelconque des revendications 1 à 7, **caractérisé en ce que** l'espace intérieur (10.3) renfermé par chaque module d'élément tubulaire (10) est réalisé en s'étendant pour partie en entonnoir ou en forme de cône.

9. Dispositif selon l'une quelconque des revendications 1 à 7, **caractérisé en ce qu'**un élément tubulaire (10) est réalisé à une ou plusieurs couches.

10. Dispositif selon la revendication 9, **caractérisé en ce qu'**un élément tubulaire (10) comporte au moins une couche extérieure (15) thermoconductrice et une couche intérieure (16) thermo-isolante.

11. Dispositif selon la revendication 10, **caractérisé en ce que** la couche extérieure (15) thermoconductrice est fabriquée en un matériau thermoconducteur, en particulier en métal, et la couche intérieure (16) thermo-isolante est fabriquée en un matériau calorifuge, en particulier un matériau carboné.

12. Dispositif selon l'une quelconque des revendications 2 à 10, **caractérisé en ce que** le dispositif de séchage et de transport (6) comporte au moins une première et une deuxième unités de transport (12, 13) pourvues chacune d'une bande transporteuse (17, 17'), d'une poulie motrice (18, 18') et d'une poulie de renvoi (19, 19').

13. Dispositif selon la revendication 12, **caractérisé en ce que** chaque bande transporteuse (17, 17') comporte une pluralité d'évidements (21) ou est fabriquée en un matériau perméable à l'air.

14. Dispositif selon l'une quelconque des revendications 1 à 13, **caractérisé en ce qu'**une pâte à cartonnage, une pâte à papier, une matière plastique, une pâte de fibres de bois ou un mélange de ces matériaux est prévu comme matériau de base comprimable.

15. Dispositif selon l'une quelconque des revendications 1 à 12, **caractérisé en ce que** le dispositif est conçu pour la fabrication de produits du type bande comportant plusieurs espaces creux (2') dans le secteur des denrées alimentaires, par exemple de produits de boulangerie ou de pâtes alimentaires.

16. Procédé de fabrication d'au moins un matériau comprimé (2) du type bande comportant plusieurs espaces creux (2'), en particulier d'un matériau de cartonnage, selon lequel un matériau de base comprimable est apporté sous pression à une partie de carter de tête de pressage (8) d'un dispositif de pressage (3), laquelle renferme plusieurs éléments tubulaires disposés le long de l'axe longitudinal du dispositif de pressage, le matériau de base comprimable étant, afin de produire le matériau comprimé (2) du type bande, comprimé par les espaces intermédiaires (10') formés par un agencement de plusieurs éléments tubulaires (10) individuels dans la partie de carter de tête de pressage (8), avec apport simultané d'un milieu gazeux ou liquide via les espaces intérieurs (10.3) des éléments tubulaires (10), **caractérisé en ce qu'**on utilise pour la fabrication du matériau comprimé (2) du type bande un dispositif selon l'une quelconque des revendications 1 à 14.
